# EUROPÄISCHE PATENTSCHRIFT

(11) **EP 0 709 757 B1**
(45) Veröffentlichungstag und Bekanntmachung des Hinweises auf die Patenterteilung: **23.08.2000**
(21) Anmeldenummer: 95100811.9
(22) Anmeldetag: 21.01.1995
(51) Int. Cl.: G05D 23/19

(54) **Verfahren und Vorrichtung zum Steuern eines Wärmeaustauschers**
Method and apparatus for operating a heat exchanger
Procédé et appareil pour actionner un échangeur de chaleur

(30) Priorität: 25.10.1994 CH 319594
(43) Veröffentlichungstag der Anmeldung: 01.05.1996
(73) Patentinhaber: Siemens Building Technologies AG, 6300 Zug (CH)
(72) Erfinder: Kocher, Peter, CH-6043 Adligenswil (CH)

(56) Entgegenhaltungen:
- CH-A- 678 886
- DE-A- 3 425 379
- DE-A- 3 533 160
- US-A- 5 335 708

## Beschreibung

Die Erfindung betrifft ein Verfahren zum Steuern des Durchflusses eines Wärmeträgermediums im Primärkreis eines Wärmeaustauschers sowie eine Vorrichtung zur Durchführung des Verfahrens gemäß dem Oberbegriff der Ansprüche 1 und 4.

Es ist bekannt, den Durchfluß im Primärkreis eines Wärmeaustauschers so zu steuern, daß die Vorlauftemperatur im Sekundärkreis vorbestimmte Werte annimmt oder einhält. Dies geschieht beispielsweise dadurch, daß die Vorlauftemperatur im Sekundärkreis gemessen und mit einem Sollwert verglichen wird. Die Differenz zwischen Sollwert und gemessenem Wert wird als Eingangsgröße für einen Regler verwendet, der mit seiner Ausgangsgröße den Durchfluß im Primärkreis nach bekannten Algorithmen derart steuert, daß bei positiver Regeldifferenz der Durchfluß erhöht und bei negativer Regeldifferenz der Durchfluß vermindert wird.

Häufig werden solche Wärmeaustauscher in Fernwärmenetzen eingesetzt. Dabei wird ein Wärmeträgermedium, vorzugsweise Wasser, in einem zentralen Fernheizwerk auf eine bestimmte Temperatur aufgeheizt und mittels Pumpen durch ein Rohrleitungsnetz an die Wärmeverbraucher verteilt. Die Temperatur, auf die das Wärmeträgermedium im Fernheizwerk aufgeheizt wird, ist oftmals konstant, sie kann aber auch der Witterung angepaßt sein.

Der Lieferant der Fernwärme ist daran interessiert, daß die Energie, die er liefert, so gut wie möglich ausgenützt wird. Dies bedeutet, daß die Rücklauftemperatur im Primärkreis so niedrig wie möglich sein sollte. Wird sie nämlich zu hoch, so heißt das, daß das Wärmeträgermedium im Fernheizwerk aufgeheizt wurde, durch das Leitungsnetz zum Verbraucher transportiert wurde und, ohne nennenswert ausgenützt worden zu sein, wieder zum Fernheizwerk zurück gelangt. Ungünstig ist dabei, daß beim Transport Verluste auftreten, die den tatsächlichen Wärmebezug bei den Verbrauchern durchaus übertreffen können und daß das Fernheizwerk die Pumpenleistung für den Durchfluß zur Verfügung stellen muß, obwohl beim eigentlichen Verbraucher nur wenig Bedarf vorliegt.

Um diese Nachteile zu umgehen, ist es bekannt, die Höhe der Rücklauftemperatur im Primärkreis des Wärmeaustauschers eines jeden Verbrauchers zu begrenzen. Eine derartige Begrenzung findet beispielsweise statt, indem die Rücklauftemperatur im Primärkreis gemessen und laufend mit einem vorbestimmten Maximalwert verglichen wird. Beim Überschreiten des Maximalwertes wird der Durchfluß im Primärkreis reduziert, so daß die Rücklauftemperatur im Primärkreis wieder fällt. Der Maximalwert der Rücklauftemperatur im Primärkreis wird dabei häufig vom Fernwärmelieferanten fest vorgegeben. Oft wird aber auch eine funktionale Abhängigkeit des Maximalwertes von der Außentemperatur vorgeschrieben, die dann im zuvor erwähnten Regler implementiert ist.

Weiterhin ist der Fernwärmelieferant daran interessiert, daß die Wärmebezieher nicht zu viel Leistung beziehen. Beziehen nämlich einzelne der Verbraucher übermäßig viel Leistung, so kann der Fall eintreten, daß die im Fernwärmenetz insgesamt zur Verfügung stehende Leistung nicht ausreicht, um den Bedarf aller Verbraucher zu decken. Um in diesem Fall eine Unterversorgung anderer Verbraucher zu vermeiden, ist es bekannt, die Leistung im Primärkreis des Wärmeaustauschers eines jeden Verbrauchers zu messen und beim Überschreiten eines vorbestimmten Maximalwertes der Leistung den Durchfluß zu drosseln.

Ebenso ist der Fernwärmelieferant daran interessiert, daß der Durchfluß des Wärmeträgermediums bei jedem einzelnen Verbraucher nicht zu groß wird. Wird der Durchfluß nämlich bei einzelnen Verbrauchern zu groß, so werden andere Verbraucher, insbesondere die weiter vom Heizwerk entfernten, weniger Durchfluß erhalten, als sie zur Deckung ihres Wärmebedarfs benötigen. Um in jedem Fall sicherzustellen, daß alle Verbraucher den von ihnen benötigten Durchfluß erhalten, müßte deshalb eine entsprechende Pumpenleistung zur Verfügung gestellt werden, die viel höher wäre, als die im Auslegungsfall tatsächlich benötigte. Um den Durchfluß bei jedem einzelnen Verbraucher zu begrenzen, ist es bekannt, den Durchfluß im Primärkreis zu messen und beim Überschreiten eines vorbestimmten Maximalwertes derart zu drosseln, daß der Maximalwert nicht mehr überschritten wird. Wärmemengen- und Durchflußbegrenzung der vorgenannten Art sind aus der DE-A1-35 33 160 bekannt.

Durch die drei vorstehend beschriebenen Verfahren, Rucklauftemperatur-Maximalbegrenzung, Leistungsbegrenzung und Durchflußbegrenzung, werden zwar die im einzelnen geschilderten Nachteile umgangen, jedoch haben diese Verfahren andere Nachteile. So erfordern sowohl die Leistungs-, als auch die Durchflußbegrenzung aufwendige Mittel zum Erfassen des Durchflusses des Wärmeträgermediums.

Die Erfahrung hat gezeigt, daß trotz der Anwendung der vorgenannten Begrenzungsverfahren immer noch Fälle auftreten, in denen die vom Fernwärmelieferanten bezogene Energie nicht gut ausgenützt wird, ohne daß aber eine oder mehrere der genannten Begrenzungen wirksam werden. Beispielsweise kommt es beim morgendlichen Aufheizen häufig vor, daß das den Durchfluß im Primärkreis des Wärmeaustauschers bestimmende Stellglied an sich den maximalen Durchfluß zuließe, daß aber die Durchflußbegrenzung nicht eingreift, weil zahlreiche Verbraucher den maximalen Durchfluß anfordern. Infolge des hohen Durchflusses hat dann die Rücklauftemperatur im Primärkreis des Wärmeaustauschers einen hohen Wert, der aber durchaus noch unter dem für die Rücklauftemperatur-Maximalbegrenzung maßgebenden Wert liegen kann.

Eine Verminderung des Durchflusses würde in diesem Fall einerseits zu einer besseren Ausnützung der Wärmeenergie beitragen, und andererseits könnte die zur Verfügung zu stellende Pumpenleistung reduziert werden, bzw. mit einer vorgegebenen Pumpenleistung mehr Verbraucher an das Fernwärmenetz angeschlossen werden. Da bei einer Reduktion des Durchflusses sich ohne äußeres Zutun eine tiefere Rücklauftemperatur im Primärkreis des Wärmeaustauschers einstellt, wird die übertragene Leistung kaum vermindert.

Um die Ausnützung der vom Fernheizwerk angelieferten Wärme zu verbessern, ist in der AT-B-394 899 vorgeschlagen worden, zwischen den Wärmeaustauscher am Übergang Fernheizsystem/Hausanlage und einen Brauchwasserspeicher einen Zwischenspeicher zu schalten und in den dabei entstehenden Teilkreisen drehzahlregelbare Pumpen einzusetzen. Die Drehzahl der Pumpen wird dabei so geregelt, daß im Zwischenspeicher eine solche Temperatur herrscht, daß sich insgesamt ein optimaler Wirkungsgrad für die Wärmeübertragung ergibt.

Der Erfindung liegt demgemäß die Aufgabe zugrunde, unabhängig von den drei vorgenannten Begrenzungsmaßnahmen eine gute Ausnützung der Wärmeenergie zu erreichen und zusätzlich eine Durchflußbegrenzung zu erzielen, ohne daß Mittel zum Erfassen des Durchflusses nötig sind.

Die genannte Aufgabe wird durch die Merkmale der Ansprüche 1 und 4 gelöst. Vorteilhafte Ausgestaltungen der Erfindung ergeben sich aus den abhängigen Ansprüchen.

Nachfolgend wird ein Ausführungsbeispiel der Erfindung anhand der Zeichnung näher erläutert. Es zeigen:
Fig. 1 ein Schema einer Heizungsanlage und
Fig. 2 ein Schema eines Reglers.

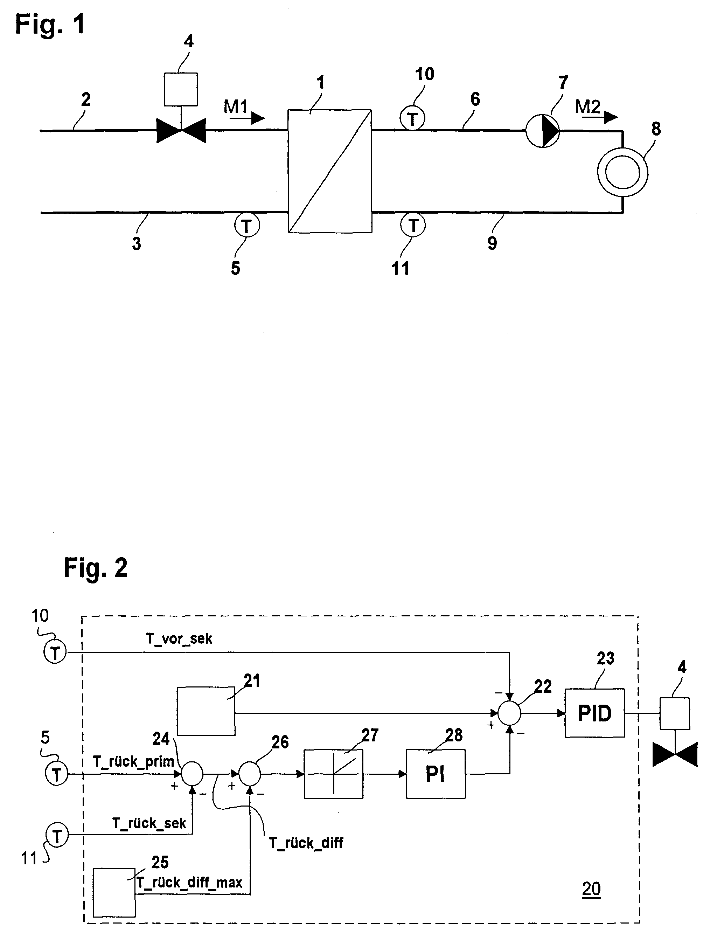

In der Fig. 1 bedeutet 1 einen Wärmeaustauscher, an dessen Primärseite eine Primär-Vorlaufleitung 2 und eine Primär-Rücklaufleitung 3 angeschlossen sind. Die Primär-Vorlaufleitung 2 und die Primär-Rücklaufleitung 3 bilden die Verbindung zu einem nicht dargestellten Fernwärmenetz, aus dem der Wärmeaustauscher 1 mit einem ersten Wärmeträgermedium M1 versorgt wird. Das Wärmeträgermedium M1 fließt vom Fernwärmenetz durch die Primär-Vorlaufleitung 2 zur Primärseite des Wärmeaustauschers 1 und von diesem durch die Primär-Rücklaufleitung 3 zum Fernwärmenetz zurück. Der Durchfluß des Wärmeträgermediums M1 durch die Primärseite des Wärmeaustauschers 1 wird durch ein Stellorgan 4, im Ausführungsbeispiel ein motorisch angetriebenes Durchgangsventil, gesteuert. Das Stellorgan 4 kann, wie in der Fig. 1 gezeigt, in die Primär-Vorlaufleitung 2 eingebaut sein, alternativ aber auch statt dessen in die Primär-Rücklaufleitung 3. Die Temperatur des primärseitigen Rücklaufs des Wärmeträgermediums M1 wird durch einen Primärrücklauf-Temperaturfühler 5 erfaßt.

Auf der Sekundärseite des Wärmeaustauschers 1 wird ein Wärmeträgermedium M2 durch eine Sekundär-Vorlaufleitung 6 mittels einer Umwälzpumpe 7 zu einer Verbrauchergruppe 8 gefordert. Die Verbrauchergruppe 8 kann beispielsweise von einem Heizkreis und/oder einer Vorrichtung zur Erwärmung von Brauchwasser gebildet sein. Von der Verbrauchergruppe 8 strömt das Wärmeträgermedium M2 über eine Sekundär-Rücklaufleitung 9 wieder zur Sekundärseite des Wärmeaustauschers 1 zurück. Die Temperatur des sekundärseitigen Vorlaufs wird durch den Vorlauf-Temperaturfühler 10, diejenige des sekundärseitigen Rücklaufs durch den Sekundärrücklauf-Temperaturfühler 11 erfaßt.

Der Aufbau gemäß der Fig. 1 entspricht dem üblichen Stand der Technik, wobei allfällig vorhandene Mittel zur Erfassung der Durchfluß- und/oder Wärmemenge nicht dargestellt sind.

Fig. 2 zeigt einen erfindungsgemäßen Regler 20, mit dem das Stellorgan 4 gesteuert wird. Der Regler 20 weist drei Eingänge auf, an die die bei der Beschreibung der Fig. 1 genannten Temperaturfühler angeschlossen sind. Die vom Primärrücklauf-Temperaturfühler 5 erfaßte Temperatur liefert dabei ein Signal T_rück_prim, also die Primärkreis-Rücklauftemperatur, die vom Vorlauf-Temperaturfühler 10 erfaßte Temperatur ein Signal T_vor_sek, also die Sekundärkreis-Vorlauftemperatur und die vom Sekundärrücklauf-Temperaturfühler 11 erfaßte Temperatur ein Signal T_rück_sek, also die Sekundärkreis-Rücklauftemperatur.

Der Regler 20 enthält einen Sollwertgeber 21 enthält, der den Sollwert für die Vorlauftemperatur im Verbraucherkreis vorgibt, der in der Figur durch das Symbol T_vor_soll gekennzeichnet ist. Dieser Sollwert kann in bekannter Weise aufgrund der herrschenden Witterung und/oder dem Istwert und dem Sollwert der Raumtemperatur gebildet werden.

In bekannter Weise wird die vom Vorlauf-Temperaturfühler 10 gemessene sekundärseitige Vorlauftemperatur T_vor_sek an einem ersten Sollwert-Istwert-Vergleicher 22 von dem aus dem Sollwertgeber stammenden Sollwert T_vor_soll subtrahiert.

Erfindungsgemäß wird die vom sekundärseitige Rücklauftemperatur T_rück_sek an einem zweiten Vergleicher 24 von der primärseitigen Rücklauftemperatur T_rück_prim subtrahiert. Das Ergebnis dieser Subtraktion ist die Differenz der Rücklauftemperaturen des Wärmeaustauschers 1, deren Signal mit T_rück_diff bezeichnet ist, und von diesem Wert wird an einem dritten Vergleicher 26 ein vorbestimmter Wert T_rück_diff_max subtrahiert. Der Wert T_rück_diff_max ist ein kennzeichnender Sollwert, der an einem zweiten Sollwertgeber 25 einstellbar ist. Vorteilhaft soll dieser Wert nicht überschritten werden.

Das resultierende Signal wird einem Begrenzer 27 vorteilhaft auf positive Werte begrenzt und über ein Übertragungsglied 28, das vorteilhaft einen PI-Algorithmus enthalten kann, auf den eigentlichen Sollwert-Istwert-Vergleicher 22 des Reglers erfindungsgemäß zusätzlich aufgeschaltet. Dabei wird das vom Übertragungsglied 28 abgegebene Signal subtrahiert, so daß am Ausgang des Sollwert-Istwert-Vergleichers 22 ein Signal erscheint, daß wie folgt zusammengesetzt ist: Vom Sollwert T_vor_soll der sekundärseitigen Vorlauftemperatur wird der Istwert T_vor_sek der sekundärseitigen Vorlauftemperatur und außerdem das vom Übertragungsglied 28 abgegebene Signal subtrahiert. Damit ist das erfindungsgemäße Verfahren verwirklicht.

Das erfindungsgemäße Verfahren besteht also darin, daß bei der Steuerung des Durchflusses durch den Wärmetauscher 1 nach Maßgabe der Differenz von Soll- und Istwert der Vorlauftemperatur im Verbraucherkreis eine Durchflußkorrektur erfolgt nach Maßgabe der Differenz T_rück_diff der Rücklauftemperaturen am Wärmetauscher 1, wobei mit steigender Differenz T_rück_diff der Durchfluß verkleinert und mit fallender Differenz T_rück_diff der Durchfluß vergrößert wird. Die Differenz T_rück_diff der Rücklauftemperaturen am Wärmetauscher 1 ist dabei definiert als Primärkreis-Rücklauftemperatur T_rück_prim minus Sekundärkreis-Rücklauftemperatur T_rück_sek.

Vorteilhaft ist, wenn die Korrektur nur dann erfolgt, wenn die Differenz T_rück_diff einen Grenzwert T_rück_diff_max überschreitet. Damit wird erreicht, daß die Korrektur dann nicht erfolgt, wenn die Belastung des Wärmetauschers 1 sehr klein ist. Vorteilhaft ist weiterhin, wenn die Korrektur nur dann erfolgt, wenn die Differenz T_rück_diff positiv ist. Damit wird erreicht, daß keine unnötige Vergrößerung des Durchflusses durch den Wärmetauscher 1 erfolgt, wenn die Belastung des Wärmetauschers 1 sehr klein ist.

Die internen Daten des Übertragungsglieds 28 haben sich nach den Gegebenheiten der Anlage zu richten. Die Regelverstärkung des Übertragungsglieds 28 kann beispielsweise 1,5 bis 4 betragen, wobei mit einem Wert gleich 2 besonders gute Regeleigenschaften erzielt worden sind. Entsprechend kann die Nachstellzeit beispielsweise im Bereich von 2 bis 30 Minuten betragen. Bei einer gegebenen Anlage hat sich ein Wert von 8 Minuten als optimal herausgestellt.

Die Verarbeitung des vom Sollwert-Istwert-Vergleicher 22 abgegebenen Signals zu einem Stellbefehl für das Stellorgan 4 erfolgt in einem dem Sollwert-Istwert-Vergleicher 22 nachgeschalteten Übertragungsglied 23 auf bekannte Art und Weise vorzugsweise nach einem PID-Algorithmus, wobei die Parameter auf die Eigenschaften von Stellorgan 4 und übrigen Anlageneigenschaften abgestimmt sind.

Bei dem zuvor erwähnten Fall der morgendlichen Aufheizung wird der Sollwertgeber zum Aufheizzeitpunkt einen gegenüber der Absenkphase erhöhten Sollwert für die sekundärseitige Vorlauftemperatur vorgeben. Dadurch wird sich das Stellorgan 4 zunächst ganz öffnen. Dadurch kommt es zu dem erwähnten großen Durchfluß auf der Primärseite des Wärmeaustauschers. Der große Durchfluß führt, da nur eine begrenzte Leistung über den Wärmeaustauscher übertragen werden kann, zu einer relativ hohen primärseitigen Rücklauftemperatur. Die sekundärseitige Rücklauftemperatur hingegen ist relativ niedrig, da der angeschlossene Heizkreis wegen der vorangegangenen Absenkphase noch ausgekühlt ist. Wenn die Differenz zwischen der primärseitigen und der sekundärseitigen Rücklauftemperatur den vorbestimmten Wert überschreitet, so wird das Ausgangssignal am dritten Vergleicher 26 positiv und dem Sollwert-Istwert-Vergleicher 22 wird ein zusätzliches Signal mit negativem Vorzeichen aufgeschaltet. Dies führt über den eigentlichen Regelalgorithmus im Übertragungsglied 23 zu einem Schließen des Stellorgans 4 und dadurch zu einem niedrigeren Durchfluß. Da das primärseitige Wärmeträgermedium M1 nun den Wärmeaustauscher 1 langsamer durchfließt, stellt sich bei nahezu gleicher Leistungsübertragung eine niedrigere primärseitige Rücklauftemperatur ein. Daraus resultiert einerseits eine bessere Ausnützung der Energie und andererseits eine Verminderung von Spitzenwerten des Durchflusses im Fernwärmenetz.

Die Verwirklichung der erfindungsgemäßen Lösung kann auch in einem digitalen Regler erfolgen, wobei die Verfahrensschritte in Form von Programmsequenzen enthalten sind.

## Patentansprüche

1. Verfahren zum Steuern des Durchflusses durch einen Wärmeaustauscher (1) mit einem den Durchfluß steuernden Stellorgan (4), das von einem Regler (20) nach Maßgabe der Differenz von Soll- und Istwert der Vorlauftemperatur im Verbraucherkreis betätigt wird, dadurch gekennzeichnet, daß der Durchfluß korrigiert wird nach Maßgabe der Differenz T_rück_diff entsprechend Primärkreis-Rücklauftemperatur T_rück_prim minus Sekundärkreis-Rücklauftemperatur T_rück_sek, wobei mit steigender Differenz T_rück_diff der Durchfluß verkleinert und mit fallender Differenz T_rück_diff der Durchfluß vergrößert wird.

2. Verfahren nach Anspruch 1, dadurch gekennzeichnet, daß die Korrektur nur dann erfolgt, wenn die Differenz T_rück_diff einen Grenzwert T_rück_diff_max überschreitet.

3. Verfahren nach Anspruch 2, dadurch gekennzeichnet, daß die Korrektur nur dann erfolgt, wenn die Differenz T_rück_diff positiv ist.

4. Verfahren nach Anspruch 3, dadurch gekennzeichnet, daß das aus der Differenz T_rück_diff gebildete Signal durch einen PI-Algorithmus weiterverarbeitet wird.

5. Vorrichtung zur Durchführung des Verfahrens nach einem der Ansprüche 1 bis 4 mit Hilfe eines einen Vergleicher (22) und einen Sollwertgeber (21) aufweisenden Reglers (20), der dadurch gekennzeichnet ist, daß er aufweist:
- einen zweiten Vergleicher (24), der die Differenz T_rück_diff bildet,
- einen zweiten Sollwertgeber (25), an dem der Grenzwert T_rück_diff_max einstellbar ist,
- einen weiteren Vergleicher (26), an dem die Differenz T_rück_diff mit dem Grenzwert T_rück_diff_max verglichen wird,
- einen Begrenzer (27), mit dem der Vergleichswert von Differenz T_rück_diff und Grenzwert T_rück_diff_max auf positive Werte begrenzt wird,
- ein Übertragungsglied (28), in dein das begrenzte Signal nach einem PI-Algorithmus verarbeitet wird und
- einen zusätzlichen invertierenden Eingang am Sollwert-Istwert-Vergleicher (22), auf den jenes verarbeitetes Signal geleitet wird.

6. Vorrichtung nach Anspruch 5, dadurch gekennzeichnet, daß das den Durchfluß steuernde Stellorgan (4) ein Drosselventil ist.

## Claims

1. A method of controlling the flow through a heat exchanger (1) with a control member (4) which controls the flow therethrough and which is actuated by a regulator (20) in accordance with the difference between the reference and actual values of the flow temperature in the consumer circuit, characterised in that the through-flow is corrected in accordance with the difference T_rück_diff corresponding to the primary circuit return temperature T_rück-prim minus the secondary circuit return temperature T_rück-sek, wherein the through-flow is reduced with a rising difference T_rück_diff and the through-flow is increased with a falling difference T_rück_diff.

2. A method according to claim 1 characterised in that correction is effected only when the difference T_rück_diff exceeds a limit value T_rück_diff_max.

3. A method according to claim 2 characterised in that correction is effected only when the difference T_rück_diff is positive.

4. A method according to claim 3 characterised in that the signal formed from the difference T_rück_diff is subjected to further processing by a PI-algorithm.

5. Apparatus for carrying out the method according to one of claims 1 to 4 by means of a regulator (20) which has a comparator (22) and a reference value generator (21) and which is characterised in that it has:
- a second comparator (24) which forms the difference T_rück_diff,
- a second reference value generator (25) at which the limit value T_rück_diff_max can be set,
- a further comparator (26) at which the difference T_rück_diff is compared to the limit value T_rück_diff_max,
- a limiter (27) with which the comparative value of the difference T_rück_diff and the limit value T_rück_diff_max is limited to positive values,
- a transmission member (28) in which the limited signal is processed in accordance with a PI-algorithm, and
- an additional inverting input at the reference value-actual value comparator (22), to which said processed signal is passed.

6. Apparatus according to claim 5 characterised in that the control member (4) for controlling the through-flow is a throttle valve.

## Revendications

1. Procédé de régulation du débit à travers un échangeur de chaleur (1) avec un organe de réglage (4) régulant le débit, lequel organe de réglage est actionné par un régulateur (20) après détermination de la différence entre la valeur de consigne et la valeur réelle de la température aller dans le circuit d'utilisation,
caractérisé en ce que le débit est corrigé après détermination de la différence *T_rück_diff* correspondant à la température de retour *T*_*rück_prim* dans le circuit primaire moins la température de retour *T_rück_sek* dans le circuit secondaire, où, avec une différence *T_rück*_*diff* croissante, le débit est diminué et où, avec une différence *T_rück_diff* décroissante, le débit est augmenté.

2. Procédé selon la revendication 1, caractérisé en ce que la correction ne se produit que si la différence *T_rück_diff* dépasse une valeur limite *T_rück_diff_max,*

3. Procédé selon la revendication 2, caractérisé en ce que la correction ne se produit que si la différence *T_rück*_*diff* est positive.

4. Procédé selon la revendication 3, caractérisé en ce que le signal formé d'après la différence *T_rück*_*diff* continue à être traité par un algorithme PI.

5. Dispositif de réalisation du procédé selon l'une quelconque des revendications 1 à 4, à l'aide d'un régulateur (20) comprenant un comparateur (22) et un indicateur (21) de la valeur de consigne, lequel régulateur est caractérisé en ce qu'il comprend :
- un deuxième comparateur (24) qui forme la différence *T_rück*_*diff,*
- un second indicateur (25) de la valeur de consigne, sur lequel on peut régler la valeur limite *T_rück_diff_max,*
- un autre comparateur (26) sur lequel la différence *T*_*rück*_*diff* est comparée à la valeur limite *T_rück_diff_max,*
- un limiteur (27) avec lequel la valeur comparative de la différence *T_rück_diff* et de la valeur limite *T_rück_diff_max* est limitée à des valeurs positives,
- un élément de transmission (28) dans lequel le signal limité est traité d'après un algorithme PI, et
- une entrée inversée supplémentaire au niveau du comparateur (22) valeur de consigne / valeur réelle, entrée où est appliqué ce signal traité.

6. Dispositif selon la revendication 5, caractérisé en ce que l'organe de réglage (4) régulant le débit est une vanne d'étranglement.
